# FASCICULE DE BREVET EUROPEEN

(11) **EP 0 752 560 B1**
(45) Date de publication et mention de la délivrance du brevet: **14.04.1999**
(21) Numéro de dépôt: 96401281.9
(22) Date de dépôt: 13.06.1996
(51) Int. Cl.: F23R 3/00

(54) **Chambre de combustion comportant une paroi annulaire multiperforée**
Brennkammerwand mit einer grossen Anzahl versetzter Kühlungsschlitze
Combustor having an annular wall with a multitude of staggered cooling slits

(30) Priorité: 14.06.1995 FR 9507054
(43) Date de publication de la demande: 08.01.1997
(73) Titulaire: SOCIETE NATIONALE D'ETUDE ET DE CONSTRUCTION DE MOTEURS D'AVIATION Snecma, F-75015 Paris (FR)
(72) Inventeur: Ansart, Denis Roger Henri, 77590 Bois le Roi (FR); Chevalier, Thierry André Jacques, 77810 Thomery (FR); Boudot, Jean-Claude Marcel, 77850 Hericy sur Seine (FR); Sandelis, Denis Jean Maurice, 77370 Nangis (FR)

(56) Documents cités:
- EP-A- 0 151 918
- FR-A- 2 635 577
- GB-A- 1 093 515
- GB-A- 1 344 800
- US-A- 2 458 497
- US-A- 4 773 593
- US-A- 4 848 081
- US-A- 5 261 223

## Description

La présente invention concerne une chambre de combustion pour turbomachine, du type comportant au moins une paroi annulaire délimitant au moins partiellement ladite chambre, ladite paroi présentant une multiperforation constituée d'une pluralité d'orifices traversant, afin d'assurer le refroidissement de ladite paroi.

Dans les chambres de combustion actuelles, les orifices sont cylindriques, et leurs axes sont inclinés dans le sens de l'écoulement des gaz de combustion dans la chambre, afin que l'air de refroidissement qui sort par ces orifices, vienne lécher la surface interne de la paroi et constitue un film pariétal de protection thermique de la paroi contre la chaleur dégagée par les gaz de combustion.

Les orifices ont un diamètre compris entre 0,3 et 0,5 mm. Le nombre d'orifices à percer dans une chambre de combustion peut atteindre 40 000, voire 50 000. Le rapport entre la section globale des orifices et la surface à refroidir est compris entre 0,015 et 0,025.

Les normes concernant le niveau de pollution exigent une limitation des émissions de fumées, des émissions d'oxydes d'azote et des émissions d'oxyde de carbone. Les conditions de fonctionnement de la chambre de combustion, notamment les températures, le ratio carburant/combustion, doivent être maîtrisées dans toutes les conditions de vol. Le débit de l'air de refroidissement par unité de surface doit également être maîtrisé. Or, les tolérances d'usinage des orifices par les techniques de perforation actuelles ne permettent pas de garantir leur diamètre avec une précision suffisante. Il s'ensuit que le débit de l'air de refroidissement est difficilement maîtrisable.

GB-A-1 093 515 décrit une chambre de combustion pour turbomachine dont la paroi présente une multiperforation constituée de fentes de section rectangulaire, réparties en rangées, les fentes étant alignées dans la direction de la longueur de leur section et également circonférentiellement dans une direction perpendiculaire à la direction du flux, les fentes étant inclinées.

Le but de la présente invention est de proposer une multiperforation qui permette un rapport plus élevé entre la section globale des orifices et la surface à refroidir et dans laquelle l'influence des tolérances d'usinage est plus faible. Accessoirement, le but de l'invention est également de proposer une multiperforation qui nécessite moins d'opérations d'usinage.

L'invention atteint son but par le fait que les orifices sont constitués par des fentes de section quasi-rectangulaire, de longueur **l** et d'épaisseur **e**.

L'épaisseur **e** est du même ordre de grandeur que le diamètre des orifices cylindriques actuels.

La longueur **l** de la section est en revanche au moins égale à 10 fois l'épaisseur **e** des fentes.

D'autres avantages et caractéristiques de l'invention ressortiront à la lecture de la description suivante faite à titre d'exemple et en référence aux dessins annexés dans lesquels :

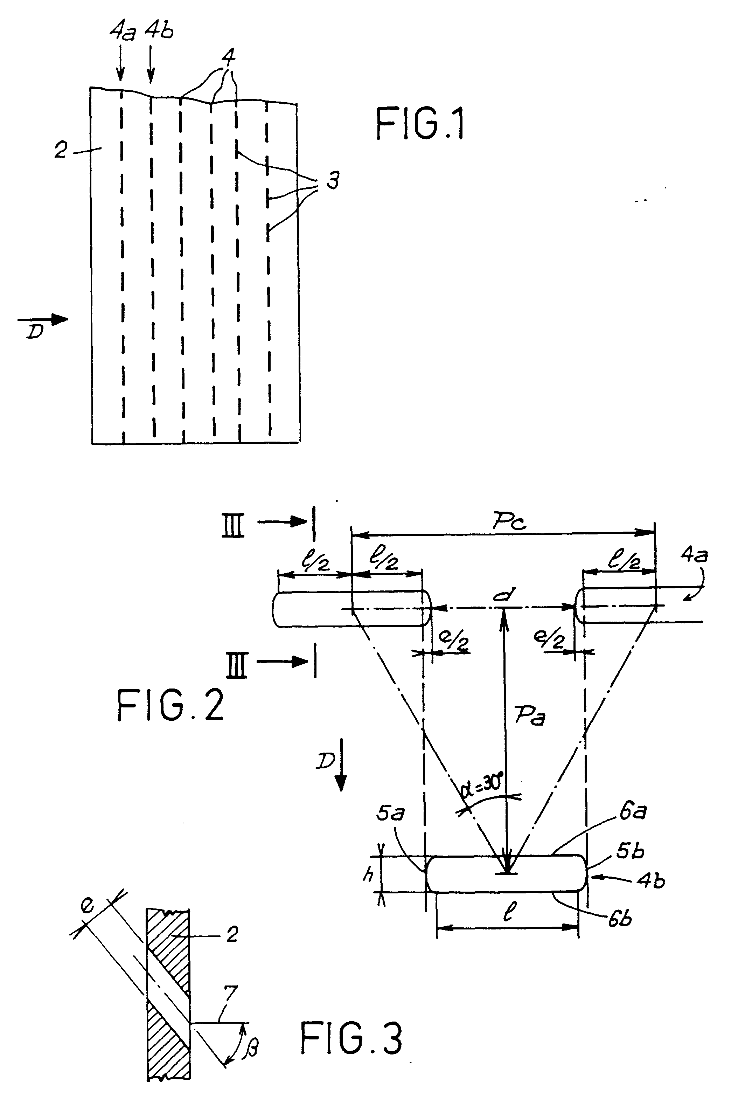

la figure 1 est une vue en plan de l'extérieur d'une portion de paroi d'une chambre de combustion ;
la figure 2 montre à grande échelle la disposition des fentes de deux rangées consécutives ;
la figure 3 est une coupe selon ligne III III de la figure 2 ;
la figure 4 montre l'influence des tolérances d'usinage sur la section des orifices de la multiperforation selon l'art antérieur et selon la présente invention ;
la figure 5 est une vue en perspective d'une portion de paroi selon la présente invention.

Les dessins montrent en plan une portion 2 d'une paroi annulaire d'une chambre de combustion d'une turbomachine dans laquelle les gaz de combustion circulent dans une direction G sensiblement parallèle à la direction D de l'air de refroidissement issu d'un compresseur.

Cette portion 2 de paroi est perforée par une pluralité de fentes 3, sensiblement perpendiculaires à la direction D et disposées en rangées circulaires 4. Les fentes 3 sont disposées selon un maillage sensiblement équilatéral et la distance **d** qui sépare deux fentes adjacentes d'une même rangée est au plus égale à la longueur **l** d'une fente, afin d'assurer le recouvrement entre les fentes de deux rangées successives 4a et 4b, chaque fente 3 ayant une section quasi rectangulaire de longueur **l** et d'épaisseur **e**, les bords latéraux se présentant sous la forme de parois semi-cylindriques 5a, 5b de diamètre **e**. Ces parois semi-cylindriques 5a et 5b sont reliées par deux parois planes 6a et 6b parallèles entre elles et distantes de l'épaisseur **e**.

Les parois 6a et 6b sont inclinées dans le sens de l'écoulement local des gaz d'un angle β par rapport à la normale 7 à la portion de paroi 2.

L'angle β peut être à contre-courant de la direction générale de l'écoulement des gaz, ce qui compte, c'est que l'air s'écoule dans la chambre de combustion dans le sens de l'écoulement local G des gaz de combustion.

La disposition proposée permet d'améliorer le rapport entre la section globale des orifices et la surface à refroidir. En choisissant un maillage équilatéral de 12, 23mm de côté, des fentes 3 ayant une section de longueur **l** = 6,14mm, et d'épaisseur **e** = 0,5mm, le rapport obtenu est de 0,025.

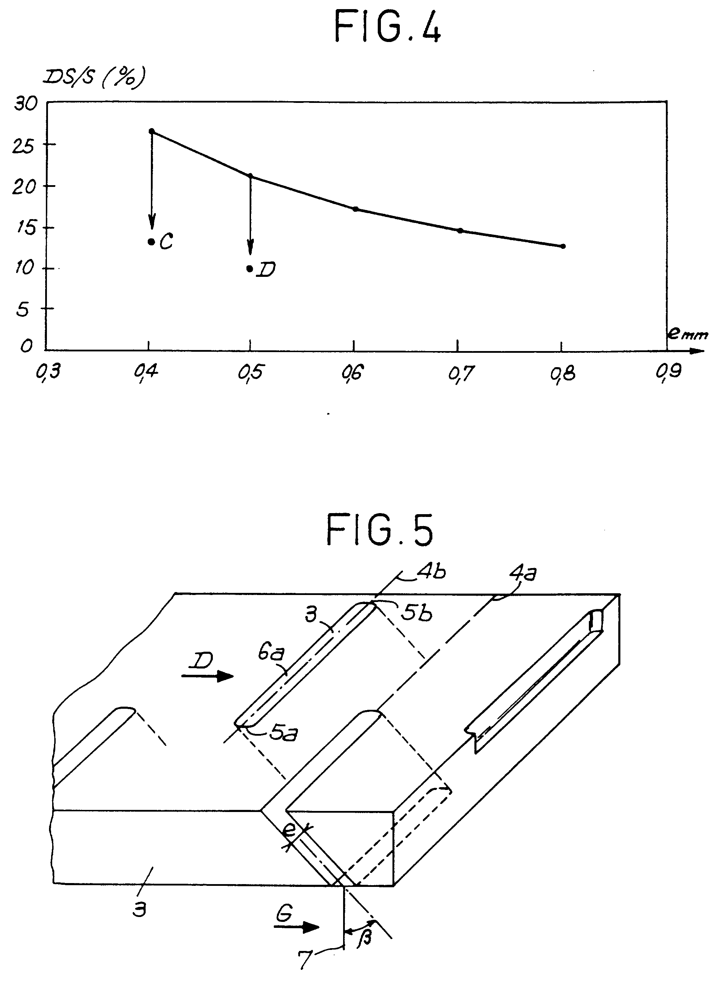

La figure 4 caractérise l'influence des tolérances dimensionnelles sur le diamètre de perçage des orifices cylindriques de l'art antérieur. La courbe représente le rapport de la différence de surface globale des perçages dues aux tolérances d'usinage par rapport à la surface globale théorique des perçages (DS/S) en fonction des diamètres des orifices cylindriques exprimés en abcisse, la tolérance d'usinage étant de 0,05mm.

Pour la solution proposée par l'invention, deux points représentatifs C et D ont été tracés. Nous pouvons voir que, pour une fente 3 ayant la même épaisseur **e** que le diamètre de perçage d'un orifice cylindrique d'art antérieur, l'écart de surface par rapport à la surface théorique est beaucoup plus faible. Le gain est de l'ordre de 50%.

## Revendications

1. Chambre de combustion pour turbomachine, du type comportant au moins une paroi annulaire (2) délimitant au moins partiellement ladite chambre, ladite paroi présentant une multiperforation constituée d'une pluralité d'orifices traversant, afin d'assurer le refroidissement de ladite paroi, les orifices étant constitués par des fentes (3) de section quasi-rectangulaire, de longueur l et d'épaisseur e, qui sont réparties en rangées (4) dans chacune desquelles les fentes (3) sont alignées dans la direction de la longueur l de leur section, caractérisée par le fait que la distance d séparant les extrémités voisines de deux fentes adjacentes est au plus égale à la longueur l de la section d'une fente (3), de manière à assurer un recouvrement entre les fentes (3) de deux rangées successives (4a,4b) et par le fait que la longueur l de la section d'une fente (3) est au moins égale à 10 fois son épaisseur.

## Patentansprüche

1. Brennkammer für Turbomaschinen mit mindestens einer ringförmigen Wand (2), die diese Kammer zumindest teilweise umgrenzt, wobei diese Wand eine Multiperforation aufweist, die aus einer Vielzahl von durchgehenden Öffnungen besteht, um die Kühlung der genannten Wand zu gewährleisten, wobei die Öffnungen aus Schlitzen (3) mit praktisch rechteckigem Querschnitt der Länge und der Breite e bestehen, die in Reihen (4) verteilt angeordnet sind, in denen die Schlitze (3) jeweils in der Richtung ihrer Lange 1 ihres Querschnitts ausgerichtet sind,
**dadurch gekennzeichnet, daß** der Abstand d zwischen den benachbarten Enden von zwei aufeinanderfolgenden Schlitzen der gleichen Reihe höchstens gleich der Länge 1 des Querschnitts eines Schlitzes (3) ist, so daß eine Überdeckung zwischen den Schlitzen (3) von zwei nebeneinanderliegenden Reihen (4a, 4b) gewährleistet ist, und dadurch, daß die Länge 1 des Querschnitts eines Schlitzes (3) mindestens das Zehnfache seiner Breite beträgt.

## Claims

1. A combustor for a turbomachine of the kind comprising at least one annular wall (2) at least partially bounding the commbustor, the wall being formed with a multiperforation in the form of a number of through orifices for cooling the wall, the orifices being in the form of quasi-rectangular section slots (3) of length l and thickness e distributed in rows (4) in each of which the slots (3) are aligned in the direction of the length l of their cross-section, characterised in that the distance d between the adjacent ends of two adjacent slots is at most equal to the length l of the cross-section of a slot (3) so that there is an overlap beteween the slots (3) of two oonsecutive rows (4a, 4b), and in that the slot cross-section length l is at least ten times the slot cross-section thickness.
